(19) **Europäisches Patentamt / European Patent Office / Office européen des brevets**

(11) **EP 1 636 509 B1**

(12) **EUROPÄISCHE PATENTSCHRIFT**

(45) Veröffentlichungstag und Bekanntmachung des Hinweises auf die Patenterteilung:
**28.02.2007 Patentblatt 2007/09**

(21) Anmeldenummer: **04729867.4**

(22) Anmeldetag: **28.04.2004**

(51) Int Cl.:
*F16F 9/04* *(2006.01)*

(86) Internationale Anmeldenummer:
**PCT/EP2004/004495**

(87) Internationale Veröffentlichungsnummer:
**WO 2004/109150 (16.12.2004 Gazette 2004/51)**

(54) **LUFTFEDER MIT NIVEAUMESSEINRICHTUNG**

PNEUMATIC SPRING PROVIDED WITH A LEVEL MEASURING DEVICE

RESSORT PNEUMATIQUE DOTE D'UN DISPOSITIF DE MESURE DE NIVEAU

(84) Benannte Vertragsstaaten:
**AT BE BG CH CY CZ DE DK EE ES FI FR GB GR HU IE IT LI LU MC NL PL PT RO SE SI SK TR**

(30) Priorität: **06.06.2003 DE 10325624**

(43) Veröffentlichungstag der Anmeldung:
**22.03.2006 Patentblatt 2006/12**

(73) Patentinhaber: **ContiTech Luftfedersysteme GmbH**
**30165 Hannover (DE)**

(72) Erfinder:
• **RECK, Siegfried**
**31582 Neinburg (DE)**

• **PEHMÜLLER, Thomas**
**37620 Wegensen (DE)**
• **BANK, Christoph**
**31275 Lehrte/Aligse (DE)**

(74) Vertreter: **Finger, Karsten et al**
**Continental Aktiengesellschaft**
**Patentabteilung**
**Postfach 169**
**30001 Hannover (DE)**

(56) Entgegenhaltungen:
**EP-A- 0 290 328        DE-A- 4 035 784**
**DE-A- 4 413 559        DE-A- 10 026 563**

EP 1 636 509 B1

## Beschreibung

### Stand der Technik

Die Erfindung betrifft eine Luftfeder mit Niveaumesseinrichtung, wie sie z. B. aus den Schriften DE 100 17 562 C1, DE 40 35 784 A1 und DE 44 13 559 A1 vorbekannt ist. Die Merkmale des Oberbegriffs sind aus der DE 100 25 631 A1 übernommen.

In jedem der genannten Beispiele besteht die Luftfeder im Wesentlichen aus zwei variabel voneinander beabstandeten Endgliedern, und zwar einem Deckel und einem Abrollkolben, und einem dazwischen druckdicht eingespannten flexiblen Balg, insbesondere einem Rollbalg.

In der Offenlegungsschrift DE 100 25 631 A1 wird ein Verfahren beschrieben, bei dem die Höhe der Feder mittels der hochfrequenten Hohlraumresonanz bestimmt wird. Damit sich der Balg wie ein elektromagnetischer Hohlraumresonator verhält, muss er gut leitfähig sein. Dies kann z. B. dadurch erreicht werden, dass die in den Balg eingebrachten Festigkeitsträger elektrisch leitfähig sind.

Diese Schrift befasst sich schwerpunktmäßig mit Details der Messelektronik. Nähere Einzelheiten über die Ausbildung der elektrisch leitfähigen Festigkeitsträger werden nicht offenbart.

Gemäß DE 100 17 562 C1 erfolgt die Höhenmessung mit Hilfe zweier Spulen, von denen die eine axial fest innerhalb des Luftfederinnenraums und die andere längenveränderlich zwischen Deckel und Abrollkolben angebracht ist. Durch Änderung der Höhenlage der Luftfeder sowie durch den Einfederungsvorgang ergibt sich ein niveauabhängiges Messsignal. Die längenveränderliche Spule kann integraler Bestandteil des Balges, d. h. der Wandung sein, wobei sie entweder auf der nach innen gewandten Oberfläche des Balges aufgedruckt oder aufgeklebt oder direkt zwischen den Schichten eingearbeitet ist.

Eine derartige Applikation der Wendelung an oder in die Balgwand erfordert einen zusätzlichen Arbeitsschritt bei der Herstellung des Balges bzw. bei der Herstellung der Luftfeder. Dadurch, dass die Wendelung nicht in der Ebene der Gewebelage(n) angeordnet ist, kann es Probleme mit der Flexibilität der Balgwand geben (Harshness-Effekt).

Die Bälge der in den Offenlegungsschriften DE 40 35 784 A1 und DE 44 13 559 A1 beschriebenen Luftfedern weisen ebenfalls in die Wandung eingearbeitete Messfäden auf.

Und zwar sind gemäß DE 40 35 784 A1 elektrische Leiter spulenförmig oder diagonal in die Balg-Wandung eingearbeitet. Dabei sind die Leiterbahnen vorzugsweise als eine, auf ein Latex-Monofil aufgebrachte Wendel längenveränderlich ausgebildet.

Die Einarbeitung von mit elektrisch leitenden Wendeln versehenen Latex-Monofil-Fäden in die Balgwand ist ebenfalls mit einem zusätzlichen Arbeitsaufwand bei der Herstellung verbunden.

Gemäß DE 44 13 559 A1 sind die in die Balgwand integrierten, elektrisch leitfähigen Messfäden dadurch gekennzeichnet, dass sie parallel zur Fadenrichtung einer Gewebelage langgestreckt und in Balglängsrichtung von einem Balgende zum anderen verlaufen. Aufgrund der Lage und der Anordnung dieser Leiterbahnen ändert sich durch den Federungsvorgang ihre Induktivität mit der Federhöhe.

Die in die Balgwand einzubringenden Fäden bestehen z. B. aus Kupferlitze, die zusätzlich zu den textilen Gewebelagen oder anstatt einzelner Fäden der Gewebelagen in die Balgwand eingebracht werden müssen. Sind die Kupferfäden nicht in der Ebene der textilen Festigkeitsträger angeordnet, so ergibt sich insgesamt eine Versteifung der Balgwand und es ist mit einem ausgeprägten Harshness-Effekt zu rechnen. Befinden sich die Kupferfäden in der Ebene der textilen Festigkeitsträger, so ergibt sich wegen der unterschiedlichen Dehnungseigenschaften von Kupferlitzen und Textilcorden eine inhomogene Dehnung der Balgwand bei Belastung, wodurch die Lebensdauer des Balges beeinträchtigt wird.

### Aufgabe der Erfindung

Die Aufgabe der Erfindung besteht darin, eine mit elektrisch leitfähigen Messfäden versehene Balgwand für eine gattungsgemäße Luftfeder zu schaffen, die die aus dem Stand der Technik aufgezeigten Nachteile nicht aufweist.

Die elektrisch leitfähige Balgwand soll insbesondere als Messmittel zur Bestimmung der Federhöhe dienen.

### Lösung und Vorteile

Der wesentliche Kern der Erfindung besteht in einer speziellen Ausgestaltung der aus Filamenten aufgebauten Festigkeitsträger, nämlich in einer Metallisierung der einzelnen Filamente.

Damit sind die elektrisch leitfähigen Filamente integraler Bestandteil der textilen Gewebelage(n) des Luftfederbalgs. Da die elektrisch leitfähigen Filamente aus demselben (Grund-)Material bestehen wie die sonstigen d. h. nichtleitenden Filamente und lediglich mit einer leitenden Oberfläche beschichtet sind, ergibt sich ein identisches, d. h. homogenes Dehnverhalten über die gesamte Balgwand. Und da die elektrisch leitfähigen Filamente nicht in einer separaten Ebene angeordnet sind, ergibt sich auch keine Versteifung der Balgwand und damit auch kein zusätzlicher Harshness-Effekt.

Die elektrisch leitfähige Beschichtung wird bereits bei der Herstellung der Filamente vorgenommen. Ein separater Arbeitsgang bei der Herstellung der Balgwand fällt deshalb nicht an.

Die in erfindungsgemäßer Weise mit elektrisch leitfähigen Filamenten versehene Balgwand stellt die Basis zur Lösung diverser Mess-Aufgaben dar.

Mit der in den Patentansprüchen aufgezeigten Lösung wird nicht nur - wie gefordert - eine Messmethode zur Bestimmung der Federhöhe bereitgestellt.

Zusätzlich kann der in dem Luftfederbalg herrschende Luftdruck und die Temperatur der Balgwand bestimmt werden. Außerdem ist eine Messung der Fadendehnung möglich. Ebenfalls können die durch Steinschlag, Abrieb usw. entstehenden und schon entstandenen Schäden frühzeitig erkannt werden. Weiterhin ist es möglich, entlang des Federbalgs elektrische Energie zu übertragen und eine Beheizung des Luftfederbalgs vorzunehmen. Die erfindungsgemäßen Strukturen aus leitfähigen Fäden zum Aufbau von Messwiderständen, Messkondensatoren und Thermoelementen sind integraler Bestandteil des Gewebes in der Luftfeder. Dadurch entfallen separate Messgrößenwandler für die Lösung der jeweiligen Messaufgabe.

Die integrierten Sensoren beruhen auf ähnlichen Leiterstrukturen, die je nach Verschaltung unterschiedliche Einzel-Aufgaben lösen: So können die Leiterstreifen zur Dehnungsmessung auch zur Detektion von Schäden an der äußeren Balgwand verwendet werden. Entsprechendes gilt für die Kondensatoren zur Balgdruckmessung. Sie lassen sich auch zur Erkennung verschleißbedingter Schäden einsetzen.

Auch die Hardware zur Auswertung der Messsignale ist bei zwei Anwendungen sehr ähnlich: Die Wechselstrom-Brücke für die Auswertung der Kapazitäten zwischen den Gewebelagen eignet sich auch zur Auswertung der Induktivität der Leiterschleife für die Höhenmessung.

*Im Einzelnen:*

*Messung der Temperatur in der Balgwand*

Um die Temperatur der Balgwand bestimmen zu können, müssen bisher diskrete Temperatursensoren (z. B. Thermoelemente) einvulkanisiert werden. Alternativ kann die Temperatur von außen mit Hilfe pyrometrischer Verfahren berührungslos gemessen werden. Alle aufgeführten Verfahren sind aufwendig und deshalb auf Einzelanwendungen beschränkt (z. B. bei der Entwicklung von Luftfedern).

*Messung der Fadendehnung*

Die Fadendehnung im Gewebe einer Luftfeder kann bisher nicht direkt gemessen werden.

*Früherkennung von Schäden*

Verschleißbedingte Schäden an Luftfederbälgen, die noch nicht zu Luftverlusten führen, können bisher nur durch Sichtprüfung festgestellt werden. Weil dies sehr aufwendig ist, werden die Luftfedern in der Regel so lange betrieben, bis sie durch Luftverlust auffallen.

*Übertragung von elektrischer Energie entlang des Federbalges*

Der Luftfederbalg besteht aus Nichtleitern. Um elektronische Komponenten im Abrollkolben mit elektrischer Energie zu versorgen, werden deshalb bisher Kabel benötigt.

*Elektrische Beheizung von Luftfederbälgen*

Es sind derzeit keine beheizbaren Luftfedern bekannt.

Im Einzelnen ergeben sich folgende Vorteile:

*a) Messung des Balgdrucks*

Durch die integrierten Messgrößenwandler entfällt der sonst erforderliche Ansehlussstutzen für einen Drucksensor.

*b) Messung der Temperatur in der Balgwand*

Die integrierten Widerstandsbahnen und Thermoelemente, die aus den leitfähigen Fasern gebildet werden, ersetzen externe Bauelemente zur Messung der Temperatur. Außerdem können mit den erfindungsgemäßen Leiterstrukturen im Gewebe alle serienmäßigen Luftfedern mit einer Temperaturmessung ausgestattet werden. Durch die Überwachung der Temperatur in der mechanisch besonders belasteten Rollfalte erhöht sich die Betriebssicherheit der Feder.

*c) Messung der Fadendehnung*

Durch die Verschaltung leitfähiger Fasern zu Dehnungsmessstreifen ist es überhaupt erst möglich, die Dehnung der innerhalb der Balgwand befindlichen, als Festigkeitsträger dienenden Fäden *direkt* zu messen.

*d) Früherkennung von Schäden*

Die Früherkennung von Schäden an der Luftfeder erhöht die Sicherheit des Fahrzeugs. Außerdem ist die Erkennung verschleißbedingter Schäden wichtig bei Lebensdauerversuchen im Rahmen der Entwicklung von Luftfedern.

*e) Übertragung von elektrischer Energie entlang des Federbalges*

Elektrische Komponenten, die sich im Kolben des Luftfedersystems oder an der Achse befinden, können ohne externe Kabel mit Energie versorgt werden. Die elektrische Energie kann über einen Stecker an der Bördelplatte eingespeist werden, separate Kabel entfallen, weil die Leiter integraler Bestandteil des Luftfederbalges sind.

f) *Elektrische Beheizung von Luftfederbälgen*

Luftfederbälge mit Elastomeren auf der Basis von Chloropren eignen sich nicht für Anwendungen bei Temperaturen unterhalb von -25°C, weil das Elastomer den Glasübergangspunkt erreicht. Für niedrigere Temperaturen wird deshalb Naturkautschuk eingesetzt. Durch eine elektrische Beheizung des Federbalges mit Hilfe der leitfähigen Fasern im Gewebe lässt sich die Temperatur an der äußeren Balgwand so regeln, dass sie stets über dem Glasübergangspunkt von Chloropren liegt. Dadurch erweitert sich das Anwendungsgebiet dieses Elastomerwerkstoffs.

## Zeichnungen

Im folgenden wird die Erfindung anhand mehrerer Ausführungsbeispiele beschrieben. Es zeigt:

Fig. 1 die schematische Darstellung einer Luftfeder im Längsschnitt;
Fig. 2a die schematische Darstellung einer gekreuzten Anordnung von Cord-Gewebelagen in einem (hier nicht im Ganzen dargestellten) Luftfeder-Rollbalg;
Fig. 2b den Schnitt A-A, gemäß Fig. 2a;
Fig. 3 ein Festigkeitsträger-Filament, das mit einer dünnen Metallschicht überzogen ist;
Fig. 4 einen aus Filamenten bestehenden Festigkeitsträger-Faden, wobei einige der Filamente metallisiert sind;
Fig. 5 den Ausschnitt aus einer Gewebelage, bei der eine bestimmte Anzahl "konventioneller" Fäden durch leitfähige Fäden ersetzt sind;
Fig. 6a eine perspektivische Darstellung der äußeren Gewebelage eines Luftfederbalgs;
Fig. 6b die Draufsicht auf zwei in dem Gewebe angeordnete, am unteren Ende der Feder elektrisch miteinander verbundene Leiterschleifen;
Fig. 7a/b die Prinzipdarstellung der von den Leiterschleifen aufgespannten Flächen, und zwar:

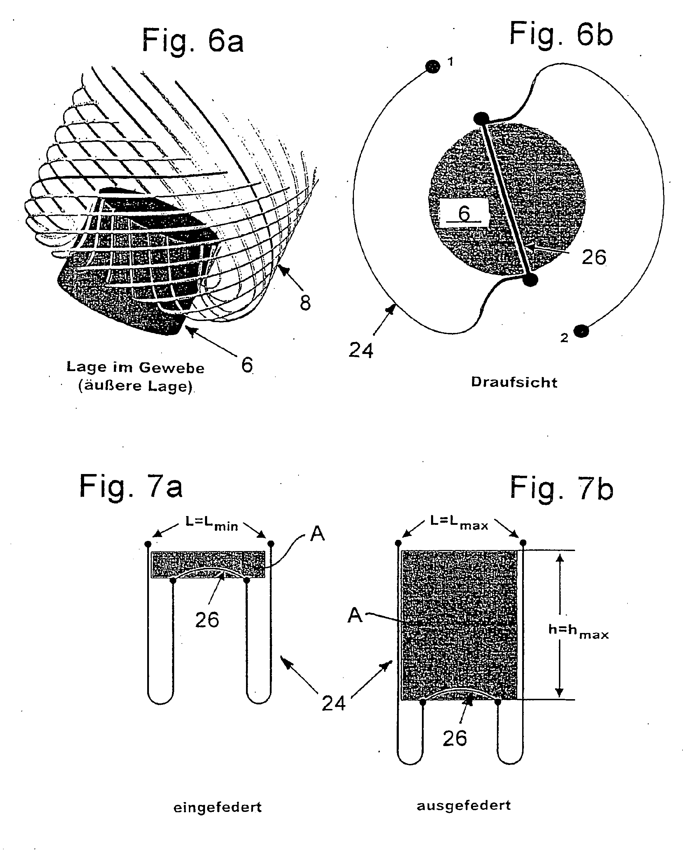

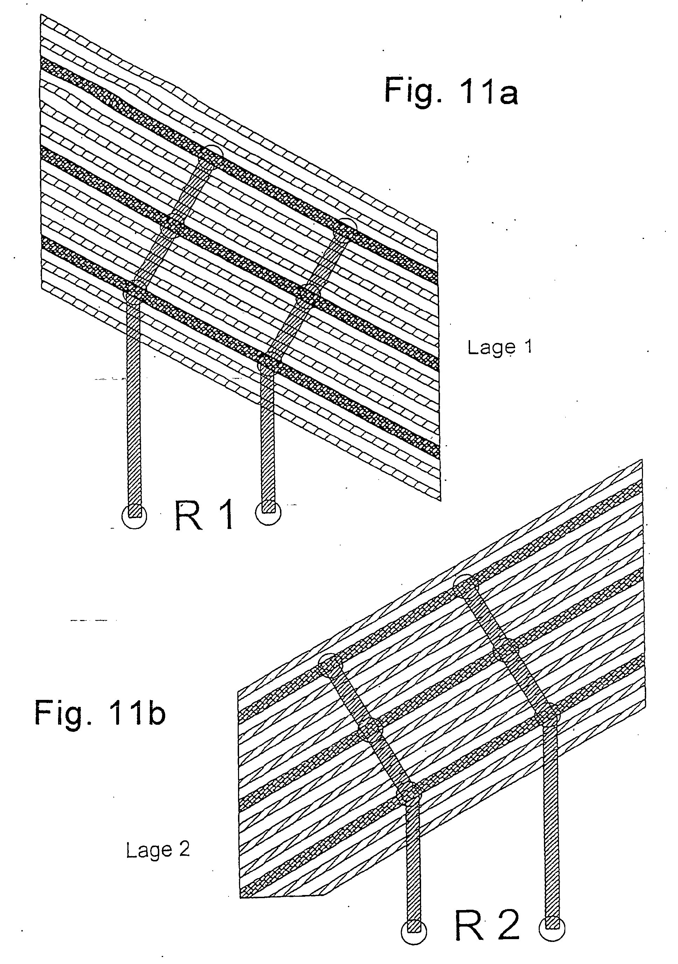

Fig. 7a im eingefederten Zustand und
Fig. 7b im ausgefederten Zustand;

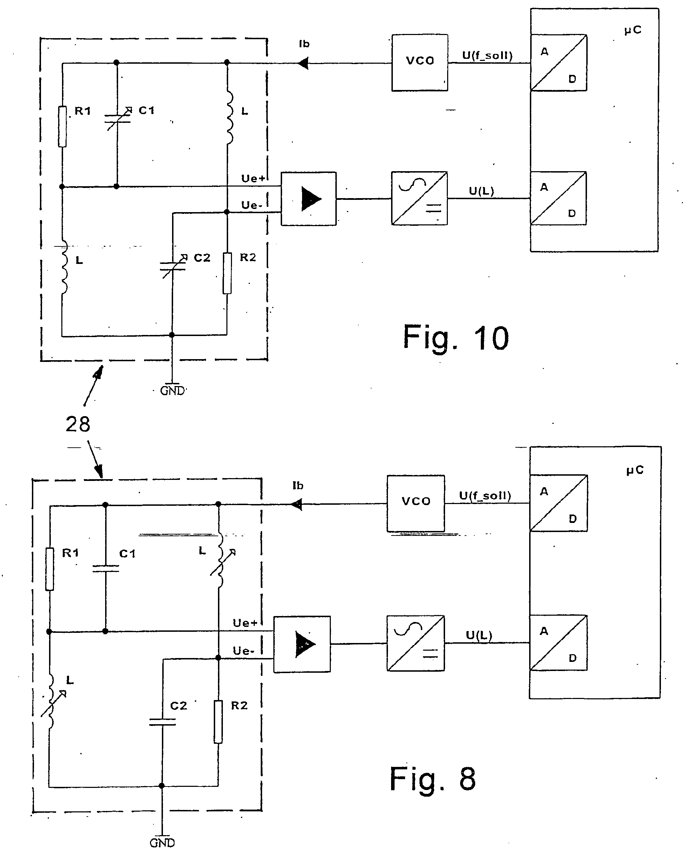

Fig. 8 ein Blockschaltbild mit einer Wechselstrom-Brückenschaltung der in Fig. 6a/b und 7a/b dargestellten Leiterschleifen zur Bestimmung der Höhe;
Fig. 9 eine Kreuzungsstelle zweier Gewebelagen;
Fig. 10 eine Wechselstrom-Brückenschaltung zur Bestimmung der Kapazität von jeweils zwei Kreuzungsstellen;

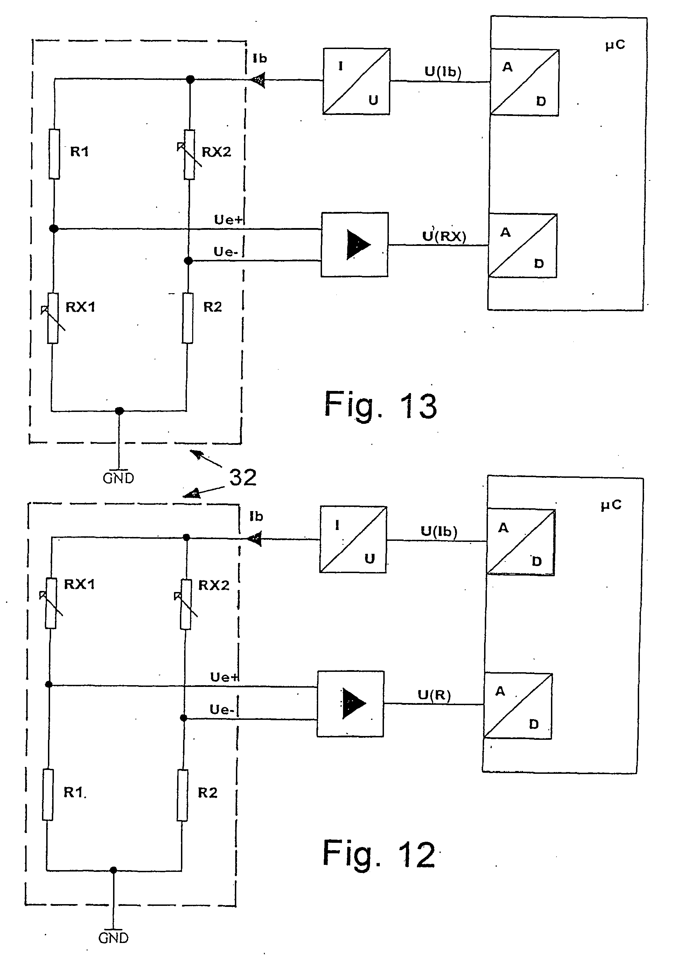

Fig. 11a/b die Prinzipdarstellung einer Dehnungsmessanordnung; und zwar:
Fig. 11a Lage 1; und
Fig. 11b Lage 2;
Fig. 12 ein Blockschaltbild mit Wheatstone-Brücke zur Temperatur-Bestimmung; und
Fig. 13 ein Blockschaltbild mit einer Wheatstone-Brücke zur Auswertung der Dehnungsmessung gemäß Fig. 11a/b.

## Beschreibung

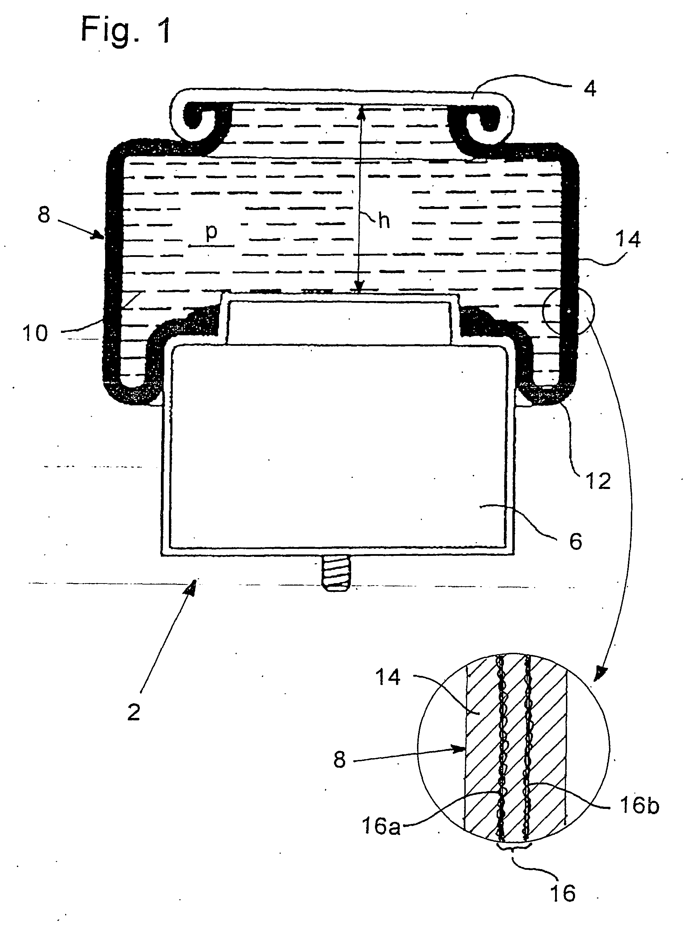

Die mit Fig. 1 gegebene schematische Darstellung zeigt die wesentlichen Details einer Luftfeder 2: zwei variabel voneinander beabstandete Endglieder 4, 6, und zwar einen Deckel 4 und einen Abrollkolben 6, und einen dazwischen druckdicht eingespannten flexiblen Rollbalg 8.
Mit Hilfe einer (nicht dargestellten) Niveauregeleinrichtung ist die zwischen Deckel 4 und Abrollkolben 6 jeweils gegebene Höhe (Niveau) *h* durch Änderung des in dem Luftfedervolumen 10 herrschenden Luftdrucks *p* regelbar. Dabei rollt die Rollfalte 12 des Rollbalgs 8 auf der Außenwand des Abrollkolbens 6 ab. Der aus elastomerem Werkstoff 14 bestehende, flexible Rollbalg 8 ist mit einem Festigkeitsträger 16 verstärkt.

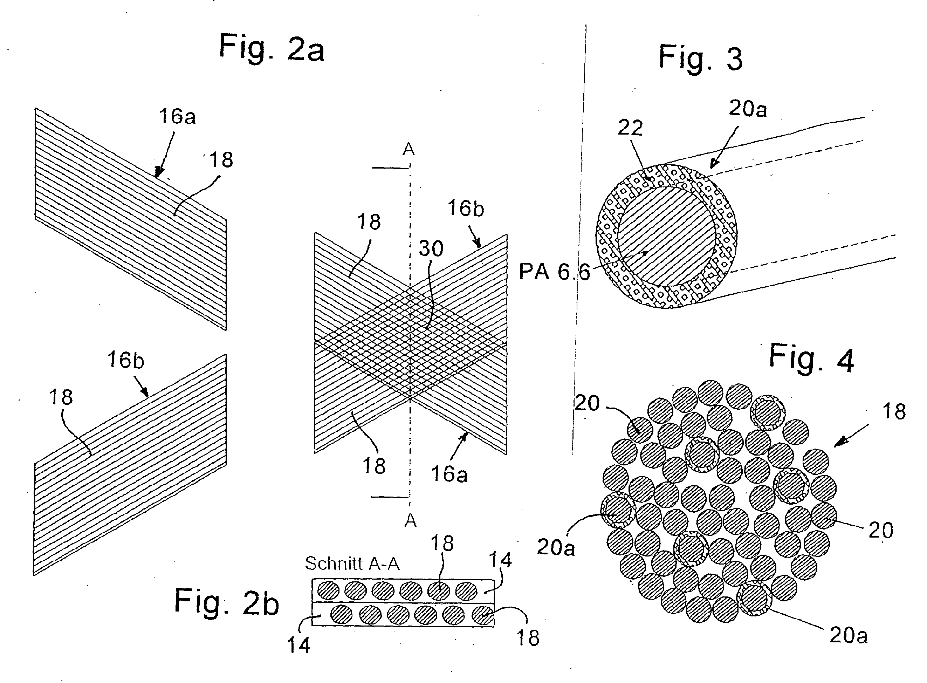

Der Festigkeitsträger 16 der Luftfeder 2 besteht in der Regel aus zwei gekreuzt angeordneten Cord-Gewebelagen 16a, 16b (Fig. 2a), die jeweils in den ElastomerWerkstoff 14 des Rollbalgs 8 einvulkanisiert sind (Fig. 2b).

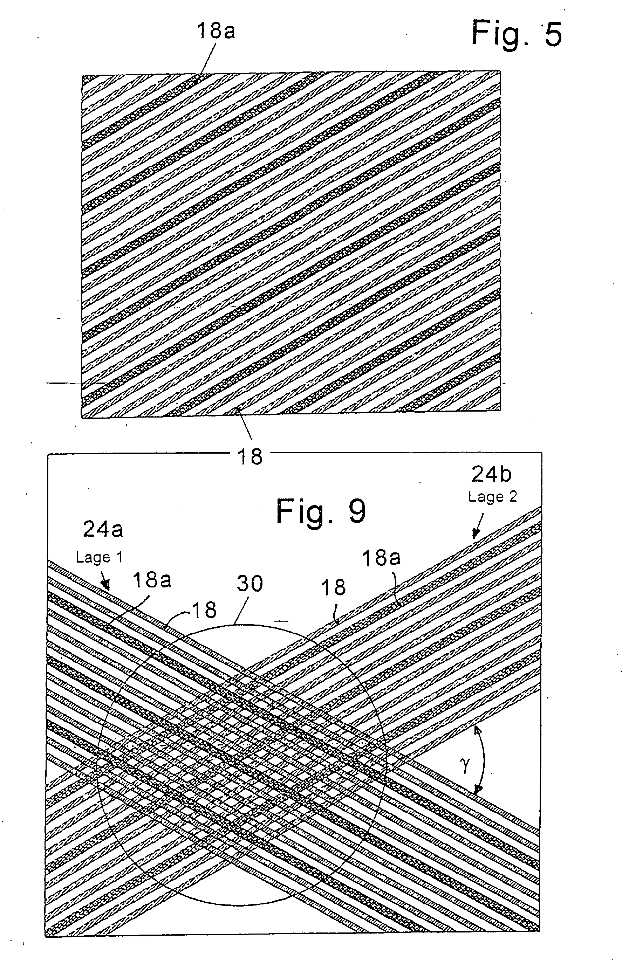

Die Grundidee der Erfindung besteht darin, die Gewebelagen 16a, 16b des textilen Festigkeitsträgers 16 mit Fäden 18 zu durchsetzen, deren Filamente 20 mit einer dünnen Metallschicht 22 (0,6 $\mu$m bis 0,7 $\mu$m) überzogen sind, um sie elektrisch leitend zu machen (Fig. 3). Um mäßige Leitfähigkeit zu erzielen, werden lediglich einzelne metallisierte Filamente 20a in den Faden 18 eingearbeitet. Die Leitfähigkeit der Fäden 18 erhöht sich mit der Anzahl der metallisierten Filamente 20a (Fig. 4). Es können auch ganze Fäden 18 metallisiert werden (metallisierter Faden 18a, Fig. 5). Die erfindungsgemäßen Filamente 20 und Fäden 18 bestehen z. B. aus Polyamid PA 6.6, das mit Nickel, Kupfer und/oder Silber (Metallschicht, 22) beschichtet ist.

Bei der Herstellung der Gewebelagen 16a, 16b wird eine bestimmte Anzahl konventioneller Fäden 18 durch leitfähige Fäden 18a ersetzt (Fig. 5). Anzahl und Dichte der elektrisch leitfähigen Fäden 18a und ihr elektrischer Leitwert richtet sich nach der zu lösenden Aufgabe:

a) *Messung der Federhöhe*

In einer 16a oder 16b oder in beiden Gewebelagen 16a, 16b wird eine Anzahl hoch leitfähiger Fäden 18a zu Leiterstreifen 24a bzw. 24b parallelgeschaltet. Zwei Leiterstreifen 24 aus derselben Gewebelage 16a oder 16b, die sich am Umfang gegenüberliegen, werden am unteren Ende des Luftbalges elektrisch miteinander verbunden (Brücke 26) und bilden eine Leiterschleife 24, deren Induktivität *L* im wesentlichen von der aufgespannten Fläche *A* abhängt (Fig. 7a/b), die weitgehend linear mit der aktuellen Federhöhe zunimmt. Für die Auswertung wird die Leiterschleife 24 als veränderliches Element in eine Wechselstrom-Brückenschaltung 28 gelegt, und mit einem hochfrequenten Strom gespeist. Mit einer zweiten Leiterschleife 24, die am Umfang um 90° versetzt angeordnet ist, lässt sich eine Vollbrücke aufbauen (Fig. 8), deren Empfindlichkeit über die Frequenz *f* des Speisestromes variiert werden kann.

b) *Messung des Balgdrucks*

In den beiden Gewebelagen 16a, 16b werden jeweils mehrere hoch leitfähige Fäden zu Leiterstreifen 24a, 24b parallelgeschaltet, die als Äquipotentialfläche einer kapazitiven Anordnung dienen. Die Leiterstreifen 24a, 24b der beiden Gewebelagen 16a, 16b sind normalerweise durch das Elastomer 14 gegeneinander isoliert. Dort, wo sich die Streifen 24a, 24b der beiden Gewebelagen 16a, 16b kreuzen, ergibt sich zwischen ihnen eine elektrische Kapazität *C,* deren Wert von der Kreuzungsfläche $A_C$ der beiden Streifen 24a, 24b abhängt (Fig. 9) und von ihrem Abstand *d* zueinander. Sowohl die Kreuzungsfläche $A_C$ als auch der Abstand *d* zwischen den Gewebelagen 16a, 16b sind abhängig von dem Gewebewinkel γ, der mit zunehmenden Druck *p* in der Feder 2 abnimmt.

$$C = \varepsilon_0 \cdot \varepsilon_r \cdot A_C(\gamma)/d(\gamma).$$

Während die Kreuzungsfläche $A_C$ aufgrund des kleiner werdenden Gewebewinkels γ mit steigendem Druck *p* abnimmt, ändert sich die Dicke der Balgwand und damit der Abstand d zwischen den Fadenlagen 16a, 16b nicht monoton mit dem Druck *p*.

Um den Druck *p* zu bestimmen, werden die Kapazitäten *C* von jeweils zwei Kreuzungsstellen 30 oberhalb der Rollfalte 12 (Fig. 1) mit Hilfe einer Wechselstrom-Brückenschaltung 28 ausgewertet (Fig. 10). Über die Arbeitsfrequenz *f* lässt sich die Empfindlichkeit der Brückenschaltung verändern.

c) *Messung der Temperatur in der Balgwand (Widerstandsmessbrücke)*

Grundlage für dieses Verfahren sind die Leiterstrukturen zur Messung der Fadendehnung (Fig. 11a/b). Der Unterschied besteht darin, dass die Fäden 18 mit Hilfe verschiedener Metalle leitfähig gemacht werden, die unterschiedliche Temperaturkoeffizienten aufweisen. Die temperatur- und dehnungsabhängigen Widerstandsbahnen werden als Wheatstone-Messbrücke 32 verschaltet (Fig. 12), und zwar so, dass sich die Dehnung der Fäden 18 in den beiden Leiterstreifen gegenseitig kompensiert, während die unterschiedlichen Temperaturkoeffizienten dazu führen, dass die Widerstandsänderungen $\Delta_R$ aufgrund der Temperatur *T* die Brücke 32 verstimmen und ein entsprechendes Ausgangssignal $U_R$ erzeugen.

d) *Messung der Fadendehnung*

Die Dehnung eines Fadens 18 im Gewebe 16 ist abhängig von der Lage des jeweiligen Messpunktes auf dem Faden 18. An der Verbindung zum Kolben 6 ist sie minimal und nimmt über die Rollfalte 12 nach außen hin zu. An der äußeren Balgwand, oberhalb der Rollfalte 12 ist die Fadendehnung maximal.
An dieser Stelle werden in einer der beiden Gewebelagen 16a oder 16b einzelne leitfähige Fäden 18a definierter Länge zusammengefasst, so dass sie einen Dehnungsmessstreifen bilden (Fig. 11a/b). Ausgewertet wird die dehnungsabhängige Widerstandsänderung des Streifens mit Hilfe einer Wheatstone-Brückenschaltung 32 (Fig. 13).

e) *Früherkennung von Schäden*

*Eine Lage*

Für die Erkennung von Beschädigungen des Federbalges 8 werden in der äußeren Gewebelage 16a bzw. 16b aus mehreren Fäden 18 mehrere leitfähige Streifen gebildet und deren Gesamtwiderstand *R* überwacht (Fig. 11a/b). Durch Schädigungen, wie Steinschlag oder Abrieb werden einzelne Filamente 20 bzw. Fasern 18a in den leitfähigen Streifen beschädigt oder durchtrennt, wodurch der Gesamtwiderstand *R* der Streifen ansteigt.

*Zwei Lagen*

Verschleißbedingte Schäden beginnen häufig mit der Ablösung des Elastomers 14 von einer Gewebelage 16a bzw. 16b. Um diese Schäden zu erkennen, werden in beiden Gewebelagen 16a, 16b leitfähige Streifen gebildet (Fig. 9). Die Kapazität C zwischen diesen Streifen wird überwacht. Sie ändert sich sehr stark, wenn sich das Elastomer 14 von einer Gewebelage 16a oder 16b löst, weil die resultierende Dielektrizitätszahl $\varepsilon_r$ dadurch drastisch absinkt.

f) *Übertragung von elektrischer Energie entlang des Federbalges*

Für die Übertragung von elektrischer Energie an elektronische Komponenten, die sich im Kolben 6 einer Luftfeder 2 befinden, werden mehrere hoch leitfähige Fäden 18a in einer Gewebelage 16a oder 16b zu der erforderlichen Anzahl von Leitern zusammengefasst (Fig. 6a, ohne Brücke).

g) *Elektrische Beheizung von Luftfederbälgen*

Um Wärme auf die Balgwand zu übertragen, werden mäßig leitfähige Fäden 18a der beiden Gewebelagen 16a, 16b zu Heizwiderständen verschaltet und mit elektrischer Energie versorgt (Fig. 6a). Um den Bedarf an elektrischer Heizleistung zu vermindern, kann die Balgheizung auf die mechanisch besonders belastete Rollfalte 12 beschränkt werden.

Eine Regelung der Heizleistung sorgt dafür, dass die Temperatur *T* der Außenwand des Balges 8 nicht unter einen kritischen Wert absinkt. Für die Regelung ist im Prinzip ein Temperaturfühler an der Balgwand erforderlich. Aufgrund der Wärmeleitung durch das Elastomer 14 sind die Heizfäden im Gewebe geringfügig wärmer als die Balgwand außen, so dass auch ihre Temperatur *T* als Regelgröße herangezogen werden kann.

**Bezugszeichenliste**

| | |
|---|---|
| 2 | Luftfeder |
| 4,6 | Endglieder |
| 4 | Deckel |
| 6 | Abrollkolben, Kolben |
| 8 | Rollbalg, Luftfederbalg |
| h | Höhe (Niveau) der Luftfeder |
| 10 | Luftfedervolumen |
| p | Luftdruck |
| 12 | Rollfalte |
| 14 | elastomerer Werkstoff, Elastomer |
| 16 | Festigkeitsträger, Gewebe |
| 16a, 16b | (Cord-)Gewebelage(n) des Festigkeitsträgers, Fadenlage(n) |
| 18 | Faden, Fäden, Faser(n) |
| 18a | metallisierter Faden |
| 20 | Filament(e) |
| 20a | metallisiertes Filament |
| 22 | Metallschicht, elektrisch leitfähiger Überzug |
| 24 | Leiterschleife |
| 24a | Leiterstreifen, Anzahl hochleitfähiger Fäden 18a (in Gewebelage 16a) |
| 24b | dto. In Gewebelage 16b |
| A | von der Leiterschleife 24 aufgespannte fläche |
| 26 | Brücke |
| L | Induktivität der Leiterschleife 24 |
| 28 | Wechselstrom-Brückenschaltung |
| f | Frequenz, Arbeitsfrequenz |
| C | elektrische Kapazität zwischen den Gewebelagen 16a und 16b im Bereich der Kreuzung der beiden Leiterstreifen |
| $A_C$ | Kreuzungsfläche |
| d | Abstand der Gewebelagen voneinander |
| y | Gewebewinkel |
| $\varepsilon_0$ | elektrische Feldkonstante (= $8{,}85416 \cdot 10^{-12}$ Fm$^{-1}$) |
| $\varepsilon_r$ | Dielektrizitätszahl |
| 30 | Kreuzungsstelle |
| T | Temperatur |
| $U_T$ | Thermospannung |
| 32 | Wheatstone-Messbrücke |
| $\Delta R$ | Widerstandsänderung |
| $U_R$ | Ausgangssignal |
| R | (Gesamt-)Widerstand |

**Patentansprüche**

1. Luftfeder (2)

   - mit zwei Endgliedern (4, 6), und zwar einem Deckel (4) und einem Abrollkolben (6),
   - mit einem druckdicht dazwischen eingespannten, flexiblen, aus elastomerem Werkstoff (14) bestehenden insbesondere Roll-Balg (Balgwand, 8), in den Festigkeitsträger (16) aus zwei, unter einem Winkel (γ) gekreuzt angeordneten, aus Fäden (18) bestehenden Cord-Gewebelagen (16a, 16b) einvulkanisiert sind,

   wobei die Fäden (18) wiederum aus einzelnen Filamenten (20) zusammengesetzt sind, und wobei die Balgwand (8) mit elektrisch leitfähigem Material insbesondere zur elektrischen Bestimmung der Federhöhe ausgestattet ist,
   **dadurch gekennzeichnet,**
   **dass** die Filamente (20) einzelner Fäden (18) elektrisch leitfähig sind.

2. Luftfeder nach Anspruch 1,
   **dadurch gekennzeichnet,**
   **dass** lediglich einzelne Filamente (20a) der einzelnen Fäden (18) elektrisch leitfähig sind.

3. Luftfeder nach Anspruch 1 oder 2,
   **dadurch gekennzeichnet,**
   **dass** die elektrisch leitfähigen Filamente (20a) einen elektrisch leitfähigen Überzug (22) aufweisen.

4. Luftfeder nach Anspruch 3,
   **dadurch gekennzeichnet,**
   **dass** der elektrisch leitfähige Überzug (22) eine Metallschicht ist, die fest mit dem Trägermaterial verbunden ist.

5. Luftfeder nach einem der Ansprüche 1 bis 4,
   **dadurch gekennzeichnet,**
   **dass** die metallisierten Filamente (18a) mit Nickel, Kupfer und/oder Silber beschichtet sind.

6. Luftfeder nach einem der Ansprüche 1 bis 5,
   **dadurch gekennzeichnet,**
   **dass** einzelne Fäden (18) insgesamt metallisiert sind (metallisierte Fäden, 18a).

7. Luftfeder nach einem der Ansprüche 1 bis 6,
   **dadurch gekennzeichnet,**
   **dass** eine vorbestimmte Anzahl "konventioneller" Fäden (18) durch leitfähige Fäden (18a) ersetzt ist, wobei sich das Verhältnis von leitfähigen (18a) und nicht leitfähigen Fäden (18) und der Leitwert der leitfähigen Fäden (18a) nach der zu lösenden Aufgabe richtet.

8. Luftfeder nach einem der Ansprüche 1 bis 7, **dadurch gekennzeichnet,** **dass** in einer (16a oder 16b) oder in beiden Gewebelagen (16a, 16b) eine Anzahl hochleitfähiger Fäden (18) am Anfang und am Ende der jeweiligen Gewebelage (16a bzw. 16b) parallelgeschaltet sind und jeweils einen Leiterstreifen (24a oder 24b) bilden, wobei zwei dieser Leiterstreifen (24a oder 24b) einer Gewebelage (16a oder 16b), die sich am Umfang gegenüberliegen, am Ende des Luftfederbalgs (8) miteinander elektrisch verbunden sind und **dadurch** jeweils eine Leiterschleife (24) bilden.

9. Luftfeder nach Anspruch 8, **dadurch gekennzeichnet,** **dass** die Leiterschleifen (24) der beiden Gewebelagen (16a, 16b) je ein Element in einem Zweig einer Wechselstrom-Brückenschaltung (28) bilden.

10. Luftfeder nach Anspruch 9, **dadurch gekennzeichnet,** **dass** die Frequenz (f) der an die Wechselstrom-Brückenschaltung (28) anlegbaren Wechselspannung variierbar ist.

11. Luftfeder nach einem der Ansprüche 1 bis 7, **dadurch gekennzeichnet,** **dass** mehrere hochleitfähige Fäden (18a) einer Gewebelage (16a bzw. 16b) durch Parallelschaltung einen leitfähigen Streifen bilden, wobei die Streifen (24a und 24b) der beiden Gewebelagen (16a, 16b) durch das Elastomer (14) gegeneinander isoliert sind und an der Kreuzungsstelle (30) eine elektrische Kapazität (C) bilden, deren Wert von der Kreuzungsfläche ($A_C$) der beiden Streifen und von ihrem Abstand (d) zueinander abhängt, wobei die Kreuzungsfläche ($A_C$) wiederum eine Funktion des Gewebewinkels ($\gamma$) ist.

12. Luftfeder nach Anspruch 11, **dadurch gekennzeichnet,** **dass** die Kapazität (C) von jeweils zwei, oberhalb der Rollfalte (12) befindlichen Kreuzungsstellen (30) kapazitive Widerstände einer Wechselstrom-Brückenschaltung (28) sind.

13. Luftfeder nach Anspruch 12, **dadurch gekennzeichnet,** **dass** die Empfindlichkeit der Brückenschaltung (28) durch die Auswahl der Arbeitsfrequenz (f) veränderbar ist.

14. Luftfeder nach einem der Ansprüche 1 bis 7,

**dadurch gekennzeichnet,** **dass** die Fäden (18a) mit Hilfe verschiedener Metalle, die unterschiedliche Temperaturkoeffizienten aufweisen, leitfähig gemacht sind.

15. Luftfeder nach Anspruch 14, **dadurch gekennzeichnet,** **dass** die temperatur- und dehnungsabhängigen Widerstandsbahnen in der Weise Elemente einer Wheatstone-Messbrücke (32) bilden, dass sich die Dehnung der Fäden (18) in den beiden Leiterstreifen gegenseitig kompensiert, während die unterschiedlichen Temperaturkoeffizienten eine temperaturabhängige Verstimmung mit einem entsprechenden Ausgangssignal zur Folge haben.

16. Luftfeder nach einem der Ansprüche 1 bis 7, **dadurch gekennzeichnet,** **dass** in einer (16a oder 16b) oder in beiden Gewebelagen (16a, 16b) einzelne Fäden (18) definierter Länge zu einem "Dehnungsmessstreifen" zusammengefasst sind und ein Element einer Wheatstone-Brückenschaltung (32) bilden.

17. Luftfeder nach einem der Ansprüche 1 bis 7, **dadurch gekennzeichnet,** **dass** jeweils mehrere leitfähige Fäden (18a) in einer (16a oder 16b) oder in beiden Gewebelage (16a, 16b) mehrere leitfähige Streifen bilden - zwecks Überwachung ihres Gesamtwiderstandes (R).

18. Luftfeder nach Anspruch 17, **dadurch gekennzeichnet,** **dass** in beiden Gewebelagen (16a, 16b) jeweils mehrere leitfähige Fäden (18a) leitfähige Streifen bilden, wobei die Streifen an ihren Kreuzungsstellen (30) jeweils eine Kapazität (C) bilden, deren Größe sich beim Ablösen einer Gewebelage (16a bzw. 16b) in messbarer Weise ändert.

19. Luftfeder nach einem der Ansprüche 1 bis 7, **gekennzeichnet durch** Zusammenfassung mehrerer hochleitfähiger Fäden (18a) in einer Gewebelage (16a bzw. 16b) zwecks Übertragung elektrischer Energie oder elektrischer Signale an mindestens eine elektronische Komponente.

20. Luftfeder nach einem der Ansprüche 1 bis 7, **dadurch gekennzeichnet,** **dass** mäßig leitfähige Fäden (18a) der beiden Gewebelagen (16a, 16b) zu Heizwiderständen miteinander verschaltet sind.

21. Luftfeder nach Anspruch 20, **dadurch gekennzeichnet,**

**dass** die beheizbaren Fäden (18a) auf die mechanisch besonders belastete Rollfalte (12) beschränkt sind.

22. Luftfeder nach Anspruch 20 oder 21, **gekennzeichnet durch**
eine Regelung der Rollbalg-Heizwiderstände unter Berücksichtigung eines kritischen Grenzwertes mittels eines Thermofühlers,
wobei die Regelgröße mit der Temperatur (T) der Heizfäden (18a) gegeben ist.


**Claims**

1. Pneumatic spring (2)

    - having two terminal elements (4, 6), specifically a lid (4) and a rolling piston (6),
    - having a flexible, in particular rolling bellows (bellows wall 8) which is clamped in between the latter in a pressure-tight fashion and is composed of elastomer material (14) and into which rigidity carriers (16) made of two cord fabric layers (16a, 16b) which are arranged crossed at an angle ($\gamma$) and are composed of threads (18) are vulcanized, the threads (18) being in turn composed of individual filaments (20), and
    the bellows wall (8) being equipped with electrically conductive material, in particular for the electrical determination of the height of the spring,

    **characterized in that** the filaments (20) of individual threads (18) are electrically conductive.

2. Pneumatic spring according to Claim 1, **characterized in that** only individual filaments (20a) of the individual threads (18) are electrically conductive.

3. Pneumatic spring according to Claim 1 or 2, **characterized in that** the electrically conductive filaments (20a) have an electrically conductive coating (22).

4. Pneumatic spring according to Claim 3, **characterized in that** the electrically conductive coating (22) is a metal layer which is permanently connected to the carrier material.

5. Pneumatic spring according to one of Claims 1 to 4, **characterized in that** the metallized filaments (18a) are coated with nickel, copper and/or silver.

6. Pneumatic spring according to one of Claims 1 to 5, **characterized in that** individual threads (18) are totally metallized (metallized threads, 18a).

7. Pneumatic spring according to one of Claims 1 to 6, **characterized in that** a predetermined number of "conventional" threads (18) are replaced by conductive threads (18a), the ratio of conductive threads (18a) to nonconductive threads (18) and the specific conductivity of the conductive threads (18a) depending on the problem to be solved.

8. Pneumatic spring according to one of Claims 1 to 7, **characterized in that** in one of the two fabric layers (16a or 16b) or in both fabric layers (16a, 16b) a number of highly conductive threads (18a) are connected in parallel at the start and at the end of the respective fabric layer (16a or 16b) and form in each case a conductor strip (24a or 24b), two of these conductor strips (24a or 24b) of one fabric layer (16a or 16b) which lie opposite one another on the circumference being connected to one another electrically at the end of the pneumatic spring bellows (8) and as a result forming a conductor loop (24) in each case.

9. Pneumatic spring according to Claim 8, **characterized in that** the conductor loops (24) of the two fabric layers (16a, 16b) each form an element in a branch of an alternating current bridge circuit (28).

10. Pneumatic spring according to Claim 9, **characterized in that** the frequency (f) of the alternating voltage which can be applied to the alternating current bridge circuit (28) can be varied.

11. Pneumatic spring according to one of Claims 1 to 7, **characterized in that** a plurality of highly conductive threads (18a) of a fabric layer (16a or 16b) form a conductive strip through connection in parallel,
the strips (24a and 24b) of the two fabric layers (16a, 16b) being insulated from one another by the elastomer (14) and forming an electric capacitor (C) at the intersection point (30), the value of which capacitor (C) depends on the intersecting area ($A_C$) of the two strips and on their distance (d) from one another, the intersecting area ($A_C$) being in turn a function of the fabric angle ($\gamma$).

12. Pneumatic spring according to Claim 11, **characterized in that** the capacitors (C) of in each case two intersection points (30) which are located above the rolling fold (12) are capacitive resistors of an alternating current bridge circuit (28).

13. Pneumatic spring according to Claim 12, **characterized in that** the sensitivity of the bridge circuit (28) can be varied by selecting the working frequency (f).

14. Pneumatic spring according to one of Claims 1 to 7, **characterized in that** the threads (18a) are made conductive by using different materials which have different temperature coefficients.

15. Pneumatic spring according to Claim 14, **characterized in that** the temperature-dependent and extension-dependent resistor tracks form elements of a Wheatstone measuring bridge (32) in such a way that the degrees of extension of the threads (18) in the two conductor strips compensate one another, while the different temperature coefficients result in temperature-dependent detuning with a corresponding output signal.

16. Pneumatic spring according to one of Claims 1 to 7, **characterized in that** in one of the fabric layers (16a or 16b) or in both fabric layers (16a, 16b) individual threads (18) of defined length are combined to form a "extension measuring strip" and form an element of a Wheatstone bridge circuit (32).

17. Pneumatic spring according to one of Claims 1 to 7, **characterized in that** in each case a plurality of conductive threads (18a) in one fabric layer (16a or 16b) or in both fabric layers (16a, 16b) form a plurality of conductive strips - for the purpose of monitoring their overall resistance (R) .

18. Pneumatic spring according to Claim 17, **characterized in that** in both fabric layers (16a, 16b) in each case a plurality of conductive threads (18a) form conductive strips, the strips each forming at their intersection points (30) a capacitor (C) whose value changes in a measurable way when a fabric layer (16a or 16b) becomes detached.

19. Pneumatic spring according to one of Claims 1 to 7, **characterized by** the combination of a plurality of highly conductive threads (18a) in one fabric layer (16a or 16b) for the purpose of transmitting electrical energy or electrical signals to at least one electronic component.

20. Pneumatic spring according to one of Claims 1 to 7, **characterized in that** moderately conductive threads (18a) of the two fabric layers (16a, 16b) are connected to one another to form heating resistors.

21. Pneumatic spring according to Claim 20, **characterized in that** the heatable threads (18a) are restricted to the rolling fold (12) which is subject to particular mechanical loading.

22. Pneumatic spring according to Claim 20 or 21, **characterized by** closed-loop control of the rolling bellows heating resistors taking into account a critical limiting value by means of a thermal sensor, the controlled variable being the temperature (T) of the heating threads (18a).

**Revendications**

1. Suspension pneumatique (2)

   - qui présente deux organes d'extrémité (4, 6), à savoir un couvercle (4) et un piston de déroulement (6),
   - un soufflet déroulant serré entre ces deux organes de manière étanche à la pression, flexible et constitué d'un matériau élastomère (14) (paroi 8 du soufflet) et dans lequel des renforts (16) constitués de deux couches (16a, 16b) de tissu de câble constituées de fils (18) et disposées en croix sous un angle ($\gamma$) sont incorporés par vulcanisation,
   - les fils (18) étant à leur tour constitués de l'assemblage de filaments individuels (20), la paroi (8) du soufflet étant dotée d'un matériau électriquement conducteur, en particulier pour déterminer par voie électrique la hauteur de suspension,

   **caractérisée en ce que**
   les filaments (20) des fils (18) individuels sont électriquement conducteurs.

2. Suspension pneumatique selon la revendication 1, **caractérisée en ce qu'**au moins certains filaments (20a) des fils individuels (18) sont électriquement conducteurs.

3. Suspension pneumatique selon les revendications 1 ou 2, **caractérisée en ce que** les filaments électriquement conducteurs (20a) présentent un revêtement électriquement conducteur (22).

4. Suspension pneumatique selon la revendication 3, **caractérisée en ce que** le revêtement électriquement conducteur (22) est une couche métallique qui est reliée solidairement au matériau de support.

5. Suspension pneumatique selon l'une des revendications 1 à 4, **caractérisée en ce que** les filaments métalliques (18a) sont revêtus de nickel, de cuivre et/ou d'argent.

6. Suspension pneumatique selon l'une des revendications 1 à 5, **caractérisée en ce que** certains fils (18) (fils métallisés 18a) sont totalement métallisés.

7. Suspension pneumatique selon l'une des revendications 1 à 6, **caractérisée en ce qu'**un nombre prédéterminé de fils "classiques" (18) sont remplacés par des fils conducteurs (18a), le rapport entre les fils conducteurs (18a) et les fils non conducteurs (18) et la valeur de la conductivité des fils conducteurs (18a) étant déterminés en fonction du problème à résoudre.

**8.** Suspension pneumatique selon l'une des revendications 1 à 7, **caractérisée en ce que** dans une couche de tissu (16a ou 16b) ou dans les deux couches de tissu (16a, 16b), un certain nombre de fils à haute conductivité (18) sont raccordés en parallèle au début et à la fin de chaque couche de tissu (16a ou 16b) et forment chaque fois un parcours conducteur (24a ou 24b), deux de ces parcours conducteurs (24a ou 24b) d'une couche de tissu (16a ou 16b) qui sont opposés à la périphérie sont reliés électriquement l'un à l'autre à l'extrémité du soufflet (8) de la suspension pneumatique et forment ainsi chacun une boucle conductrice (24).

**9.** Suspension pneumatique selon la revendication 8, **caractérisée en ce que** les boucles conductrices (24) des deux couches de tissu (16a, 16b) forment chacune un élément d'une branche d'un circuit de pont (28) à courant alternatif.

**10.** Suspension pneumatique selon la revendication 9, **caractérisée en ce que** la fréquence (f) de la tension alternative appliquée sur le circuit de pont (28) à courant alternatif peut être modifiée.

**11.** Suspension pneumatique selon l'une des revendications 1 à 7, **caractérisée en ce que** plusieurs fils (18a) à haute conductivité d'une couche de tissu (16a ou 16b) forment un parcours conducteur par raccordement en parallèle,
les parcours (24a et 24b) des deux couches de tissu (16a, 16b) étant isolés l'un de l'autre par l'élastomère (14) et formant au point de croisement (30) une capacité électrique (C) dont la valeur dépend de la surface de croisement (A$_c$) des deux parcours et de leur distance mutuelle (d),
la surface de croisement (A$_c$) étant elle-même fonction de l'angle (γ) formé entre les tissus.

**12.** Suspension pneumatique selon la revendication 11, **caractérisée en ce que** la capacité (C) de deux points de croisement (30) situés au-dessus du pli (12) de roulement forme une résistance capacitive d'un circuit de ponts (28) à courant alternatif.

**13.** Suspension pneumatique selon la revendication 12, **caractérisée en ce que** la sensibilité du circuit de ponts (28) peut être modifiée par la sélection de la fréquence de travail (f).

**14.** Suspension pneumatique selon l'une des revendications 1 à 7, **caractérisée en ce que** les fils (18a) sont rendus conducteurs à l'aide de différents métaux qui présentent différents coefficients de température.

**15.** Suspension pneumatique selon la revendication 14, **caractérisée en ce que** les pistes de résistance qui dépendent de la température et de l'allongement forment d'une certaine manière les éléments d'un pont de mesure de Wheatstone (32), **en ce que** l'allongement des fils (18) dans les deux parcours conducteurs est compensé mutuellement, tandis que les différents coefficients de température ont pour conséquence une modification en fonction de la température, avec un signal de sortie correspondant.

**16.** Suspension pneumatique selon l'une des revendications 1 à 7, **caractérisée en ce que** dans une couche de tissu (16a ou 16b) ou dans les deux couches de tissu (16a, 16b), certains fils (18) de longueur définie sont rassemblés pour former un "parcours de mesure d'allongement" et forment un élément d'un circuit de ponts de Wheatstone (32).

**17.** Suspension pneumatique selon l'une des revendications 1 à 7, **caractérisée en ce que** plusieurs fils conducteurs (18a) d'une des couches de tissu (16a ou 16b) ou des deux couches de tissu (16a, 16b) forment plusieurs parcours conducteurs, de manière à pouvoir surveiller leur résistance globale (R).

**18.** Suspension pneumatique selon la revendication 17, **caractérisée en ce que** dans les deux couches de tissu (16a, 16b), plusieurs fils conducteurs (18a) forment des parcours conducteurs, les parcours formant en leur point de croisement (30) une capacité (C) dont la valeur varie de manière mesurable lors du décollement d'une couche de tissu (16a ou 16b).

**19.** Suspension pneumatique selon l'une des revendications 1 à 7, **caractérisée par** l'assemblage de plusieurs fils à haute conductivité (18a) dans une couche de tissu (16a ou 16b) pour transmettre de l'énergie électrique ou des signaux électriques à au moins un composant électronique.

**20.** Suspension pneumatique selon l'une des revendications 1 à 7, **caractérisée en ce que** des fils moyennement conducteurs (18a) des deux couches de tissu (16a, 16b) sont raccordés l'un à l'autre pour former des résistances de chauffage.

**21.** Suspension pneumatique selon la revendication 20, **caractérisée en ce que** les fils chauffants (18a) sont restreints au pli (12) de roulement particulièrement fort sollicité sur le plan mécanique.

**22.** Suspension pneumatique selon les revendications 20 ou 21, **caractérisée par** une régulation des résistances chauffantes du soufflet déroulant qui tient compte d'une valeur frontière critique au moyen d'une sonde thermique, la grandeur de régulation étant définie par la température (T) des fils chauffants (18a).

# Fig. 1

## Fig. 2a

16a

18

16b

18

18

30

16b

18

18

16a

A

A

## Fig. 3

22

20a

PA 6.6

## Fig. 4

20

18

20a

20

20a

Schnitt A-A

18

14

14

18

## Fig. 2b

EP 1 636 509 B1

Fig. 5

18a

18

24a
Lage 1

18a

Fig. 9

30

18

18

18a

24b
Lage 2

γ

# Fig. 6a

Lage im Gewebe
(äußere Lage)

6

# Fig. 6b

Draufsicht

# Fig. 7a

eingefedert

# Fig. 7b

ausgefedert

Fig. 11a

Lage 1

R 1

Fig. 11b

Lage 2

R 2

Fig. 10

Fig. 8

Fig. 13

32

Fig. 12